# EUROPEAN PATENT APPLICATION

(11) **EP 1 968 255 A2**
(43) Date of publication of application: **10.09.2008**
(21) Application number: 08004291.4
(22) Date of filing: 07.03.2008
(51) Int. Cl.: H04L 12/56

(54) **Apparatus and method for releasing mobile station information of wireless access communication system using Multi-Hop relay scheme**

(30) Priority: 08.03.2007 KR 20070023032
(71) Applicant: Samsung Electronics Co., Ltd, Suwon-si, Gyeonggi-do 443-742 (KR)
(72) Inventor: Kang, Hyun-Jeong, Gangnam-gu Seoul (KR); Son, Jung-Je, Seongnam-si Gyeonggi-do (KR); Oh, Chang-Yoon, Yongin-si Gyeonggi-do (KR); Lim, Hyoung-Kyu, Daerim3-dong, Yeodeungpo-gu, Seoul (KR); Lee, Sung-Jin, Songpa-gu, Seoul (KR); Chang, Young-Bin, Dongan-gu, Anyang-si, Gyeonggi-do (KR)
(74) Representative: Grünecker, Kinkeldey, Stockmair & Schwanhäusser Anwaltssozietät

(57) **Abstract**

Disclosed is an apparatus and method for releasing MS information in a wireless access communication system using a multi-hop relay scheme. In a method for a communication operation of a BS, when a data transmission path of an MS changes, one or more RSs from which information about the MS is to be removed are determined. Thereafter, a path removal message is generated and the path removal message is transmitted to the one or more RSs.

## Description

### PRIORITY

This application claims priority under 35 U.S.C. § 119 to an application filed in the Korean Intellectual Property Office on March 8, 2007, and assigned Serial No. 2007-23032, the contents of which are incorporated herein by reference.

### BACKGROUND OF THE INVENTION

### 1. Field of the Invention

The present invention relates generally to a wireless access communication system using a multi-hop relay scheme, and, in particular, to an apparatus and method for a signaling process to remove mobile station information from a relay station on a multi-hop path in a wireless access communication system.

### 2. Description of the Related Art

Extensive research is being conducted to provide various Quality of Service (QoS) features with a data rate of about 100 Mbps in advanced fourth-generation (4G) communication systems. The 4G communication system is evolving to provide mobility, high data rate transmission, and high QoS in a Broadband Wireless Access (BWA) communication system such as a Local Area Network (LAN) system and a Metropolitan Area Network (MAN) system. Typical examples of the above system are identified in the Institute of Electrical and Electronics Engineers (IEEE) 802.16d system and the IEEE 802.16e system standards.

The IEEE 802.16d system and the BWA communication system use an Orthogonal Frequency Division Multiplexing (OFDM)/Orthogonal Frequency Division Multiple Access (OFDMA) scheme. The IEEE 802.16d system considers only a fixed Subscriber Station (SS) and a single cell structure (i.e., the mobility of an SS is not considered). The IEEE 802.16e system considers the mobility of an SS. When the mobility of an SS is considered, the SS will be referred to as a Mobile Station (MS).

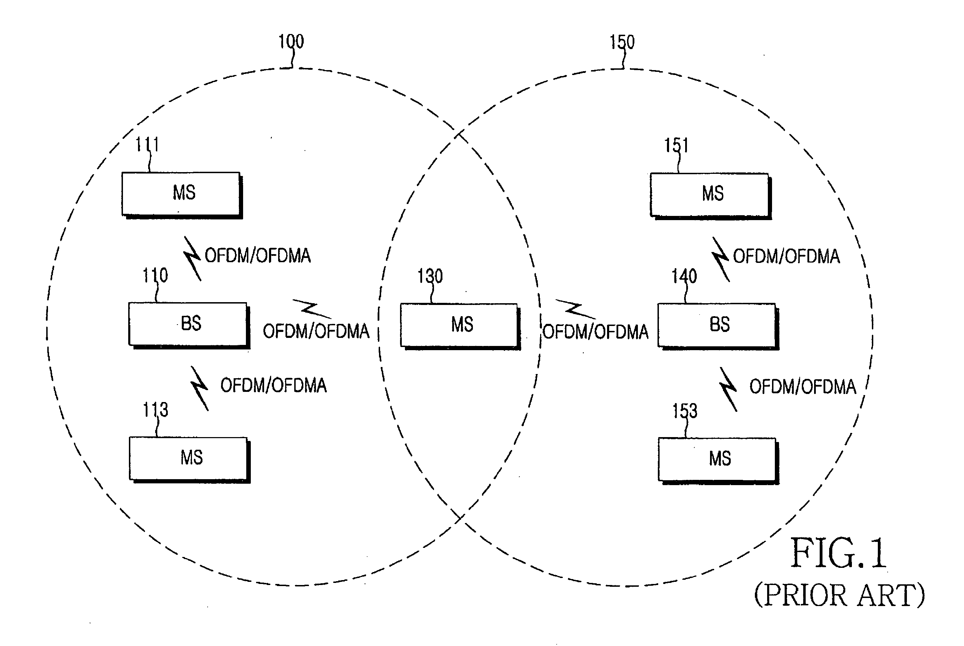

FIG 1 is a block diagram of a conventional IEEE 802.16e system. Referring to FIG. 1, the IEEE 802.16e system has a multi-cell structure. The IEEE 802.16e system includes a cell 100, a cell 150, a Base Station (BS) 110 managing the cell 100, a BS 140 managing the cell 150, and a plurality of MSs 111, 113, 130, 151 and 153. The signal exchange between the BSs 110 and 140 and the MSs 111, 113, 130, 151 and 153 is performed using an OFDM/OFDMA scheme. The MS 130 is located in a boundary region (i.e., a handover region) between cells 100 and 150. When MS 130 moves from the cell 100 of BS 110 into cell 150 of BS 140 while communicating with the BS 110, the serving BS of the MS 130 changes from BS 110 to BS 140.

Because a signaling communication between a stationary BS and an MS is performed through a direct link as illustrated in FIG 1, the IEEE 802.16e system can easily provide a highly reliable wireless link between the BS and the MS. However, because the BS is stationary, the IEEE 802.16e system has a low flexibility in constructing a wireless network. Accordingly, use of the IEEE 802.16e system makes it difficult to provide an efficient communication service in a radio environment where traffic distribution or call requirements change frequently.

In order to overcome this problem, a stationary Relay Station (RS), a mobile RS or general MSs can be used to apply a multi-hop relay data transmission scheme to a general cellular communication system such as the IEEE 802.16e system. Use of the multi-hop relay wireless communication system makes it possible to reconfigure a network in rapid response to a change in the communication environment and to operate the entire wireless network more efficiently. For example, the multi-hop relay wireless communication system can expand a cell coverage area and increase a system capacity. When channel conditions between a BS and an MS are poor, an RS is installed between the BS and the MS to establish a multi-hop relay link therebetween, thereby making it possible to provide the MS with a radio channel having better channel conditions. In addition, the multi-hop relay scheme is used in a cell boundary region with poor channel conditions, thereby making it possible to provide a high-rate data channel and to expand the cell coverage area.

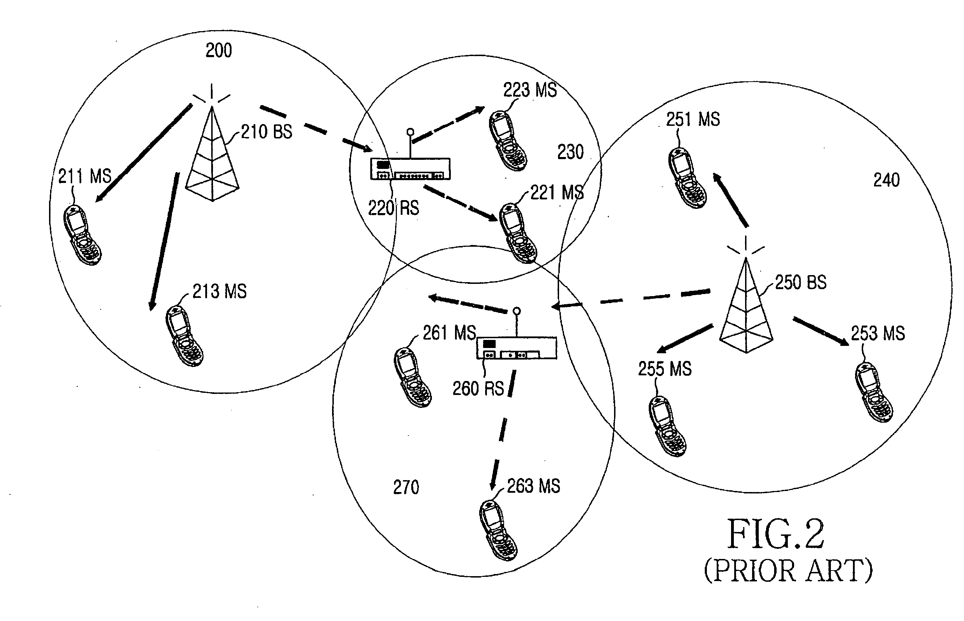

FIG 2 illustrates a conventional BWA communication system that uses a multi-hop relay scheme to expand a BS coverage area. Referring to FIG 2, the multi-hop relay BWA communication system has a multi-cell structure. The multi-hop relay BWA communication system includes a cell 200, a cell 240, a BS 210 managing the cell 200, a BS 250 managing the cell 240, a plurality of MSs 211 and 213 located within cell 200, a plurality of MSs 221 and 223 located in a region 230 outside cell 200 of the BS 210 and communicating with the BS 210, an RS 220 providing a multi-hop relay path between BS 210 and MSs 221 and 223 located in region 230, a plurality of MSs 251, 253 and 255 located in cell 240, a plurality of MSs 261 and 263 located in a region 270 outside cell 240 of BS 250 and communicating with the BS 250, and an RS 260 providing a multi-hop relay path between BS 250 and MSs 261 and 263 located in the region 270. An OFDM/OFDMA scheme is used for communication among BSs 210 and 250, RSs 220 and 260, and MSs 211, 213, 221, 223, 251, 253, 255, 261, and 263.

Although MSs 211 and 213 located in cell 200 and RS 220 can directly communicate with BS 210, MSs 221 and 223 located in region 230 cannot directly communicate with BS 210. Therefore, RS 220 covers region 230 to relay signals between BS 210 and MSs 221 and 223. That is, MSs 221 and 223 can communicate with BS 210 through RS 220. Further, RS 260 and MSs 251, 253, and 255 located in cell 240 can directly communicate with BS 250, while MSs 261 and 263 located in the region 270 cannot directly communicate with the BS 250. Therefore, RS 260 covers region 270 to relay signals between BS 250 and MSs 261 and 263. That is, MSs 261 and 263 can communicate with BS 250 through RS 260.

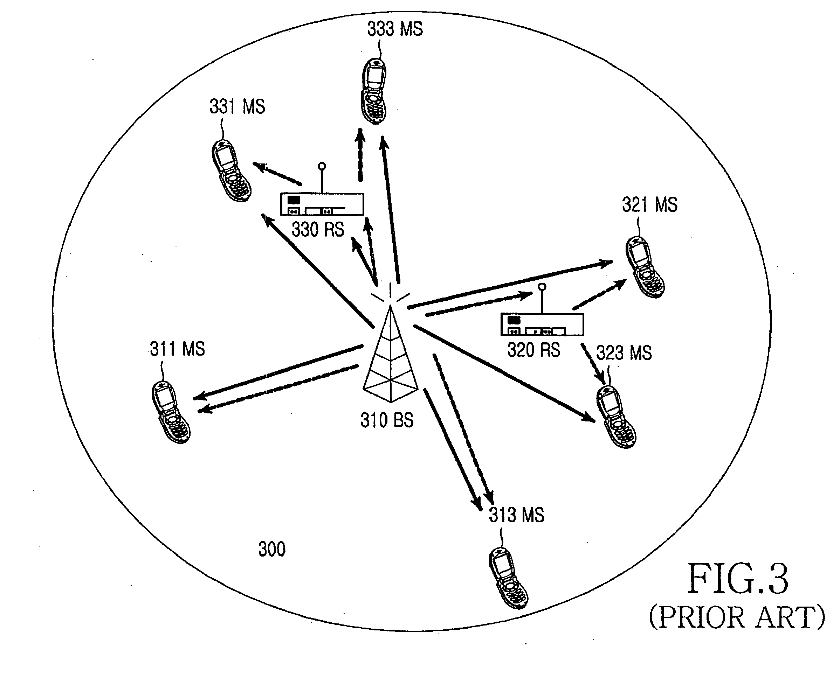

FIG 3 illustrates a conventional BWA communication system that uses a multi-hop relay scheme to increase a system capacity. Referring to FIG 3, the multi-hop relay BWA communication system includes a BS 310, a plurality of MSs 311, 313, 321, 323, 331, and 333, and RSs 320 and 330 providing multi-hop paths between BS 310 and MSs 311, 313, 321, 323, 331, and 333. BS 310, MSs 311, 313, 321, 323, 331, and 333, and RSs 320 and 330 communicate with one another by an OFDM/OFDMA scheme. BS 310 manages a cell 300. RSs 320 and 330 and MSs 311, 313, 321, 323, 331, and 333 that are in the cell 300 directly communicate with BS 310.

When some of MSs 321, 323, 331, and 333 are in a boundary region of cell 300, Signal-to-Noise Ratios (SNRs) of direct links between BS 310 and MSs 321, 323, 331, and 333 can be low. In this case, RS 320 relays unicast traffic between BS 310 and MSs 321 and 323. The MSs 321 and 323 make unicast communication with the BS via RS 320. Further, RS 330 relays unicast traffic between BS 310 and MSs 331 and 333. MSs 331 and 333 make unicast communication with the BS via RS 330. RSs 320 and 330 provide high-rate data paths to MSs 321, 323, 331, and 333, thereby increasing the effective transfer rates of MSs 321, 323, 331, and 333 and the capacity of the multi-hop relay BWA communication system.

In the multi-hop relay BWA communication systems of FIGS. 2 and 3, RSs 220, 260, 320, and 330 can be infrastructure RSs that are installed by a service provider and managed by BSs 210, 250, and 310 or can be client RSs that operate as SSs, MSs, or RSs. Further, RSs 220, 260, 320, and 330 can be stationary RSs, nomadic RSs (e.g., notebooks), or mobile RSs having mobility like the MS.

In such a multi-hop relay wireless communication system, an MS may perform a handover to another BS or RS when it moves out of a coverage area of a BS or RS while communicating with the BS or RS. Herein, the MS completes a handover process by performing a network reentry process with respect to the BS or RS corresponding to a target node, and then performs communication through the target node. At this point, the BS or RS corresponding to the previous serving node may retain information about the MS, which has performed a handover to the target node, for a predetermined time. Also, the MS information may be used for the network reentry process between the MS and the target node. Meanwhile, the previous serving node does not need to retain the MS information any more after the MS completes the handover to the target node. Also, when a path between the BS and the MS is removed due to the handover of the MS, the corresponding RSs do not need to retain the MS information any more. What is therefore required is a signaling process for removing MS information from the corresponding nodes that do not need to retain the MS information any more due to, for example, a handover.

### SUMMARY OF THE INVENTION

An object of the present invention is to substantially solve at least the above problems and/or disadvantages and to provide at least the advantages below. Accordingly, an object of the present invention is to provide an apparatus and method for a signaling process to remove MS information in a multi-hop relay BWA communication system.

Another object of the present invention is to provide an apparatus and method for a signaling process to remove MS information from an RS on a multi-hop path in a multi-hop relay BWA communication system.

Still another object of the present invention is to provide an apparatus and method to control removal of MS information from RSs on an MS data transmission path in a multi-hop relay BWA communication system.

According to one aspect of the present invention, a method for a communication operation of a BS in a wireless communication system using a multi-hop relay scheme includes, when a data transmission path of an MS changes, determining one or more RSs from which information about the MS is to be removed, generating a path removal message, and transmitting the path removal message to the one or more RSs.

According to another aspect of the present invention, a method for a communication operation of an RS in a wireless communication system using a multi-hop relay scheme includes receiving a path establishment message from a BS or a superordinate RS, extracting a path identifier and a connection identifier from the path establishment message, and adding a binding of the extracted path identifier and connection identifier into a routing table.

According to still another aspect of the present invention, an apparatus for a BS in a wireless communication system using a multi-hop relay scheme includes a controller for determining a data transmission path of an MS, a message generator for generating a path establishment message including information about the determined path, and a transmitter for encoding the path establishment message from the message generator and transmitting the encoded path establishment message to an RS.

According to yet another aspect of the present invention, an apparatus for an RS in a wireless communication system using a multi-hop relay scheme includes a receiver for physical-layer decoding a received message; a message processor for analyzing a signaling message received from the receiver, and extracting a path identifier and a connection identifier from a path establishment message received from a BS or a superrodinate RS; and a controller for adding a binding of the extracted path identifier and connection identifier into a routing table.

### BRIEF DESCRIPTION OF THE DRAWINGS

The above and other objects, features and advantages of the present invention will become more apparent from the following detailed description when taken in conjunction with the accompanying drawings in which:
FIG 1 is a block diagram of a conventional IEEE 802.16e system;
FIG 2 illustrates a conventional BWA communication system that uses a multi-hop relay scheme to expand a BS coverage area;
FIG 3 illustrates a conventional BWA communication system that uses a multi-hop relay scheme to increase a system capacity;
FIG 4 is a flowchart illustrating operation of a BS for transmitting an MS information establishment/removal request to an RS on an MS data transmission path in a multi-hop relay BWA communication system according to an embodiment of the present invention;
FIG 5 is a flowchart illustrating operation of the RS for receiving an MS information establishment/removal request from the BS in the multi-hop relay BWA communication system according to an embodiment of the present invention;
FIG 6 is a flow diagram illustrating a signal flow between the BS and the RS for processing the MS information establishment/removal request in the multi-hop relay BWA communication system according to an embodiment of the present invention; and
FIG 7 is a block diagram of a BS (or RS) according to an embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail. Also, the terms used herein are defined according to the functions of the present invention. The terms may vary depending on user's or operator's intension and usage. The terms used herein must be understood based on the descriptions made herein.

The present invention provides a scheme for a signaling process to remove MS information from one or more RSs on an MS data transmission path in a multi-hop relay BWA communication system. For example, the multi-hop relay BWA communication system uses an OFDM scheme or an OFDMA scheme. Thus, the multi-hop relay BWA communication system can transmit physical channel signals using a plurality of subcarriers, thereby enabling high-rate data transmission. In addition, the multi-hop relay BWA communication system can provide a multi-cell structure, thereby supporting the mobility of an MS.

In the following description, a multi-hop relay BWA communication system is used to describe the present invention. However, the present invention can be applied to any cellular communication system that uses a multi-hop relay scheme.

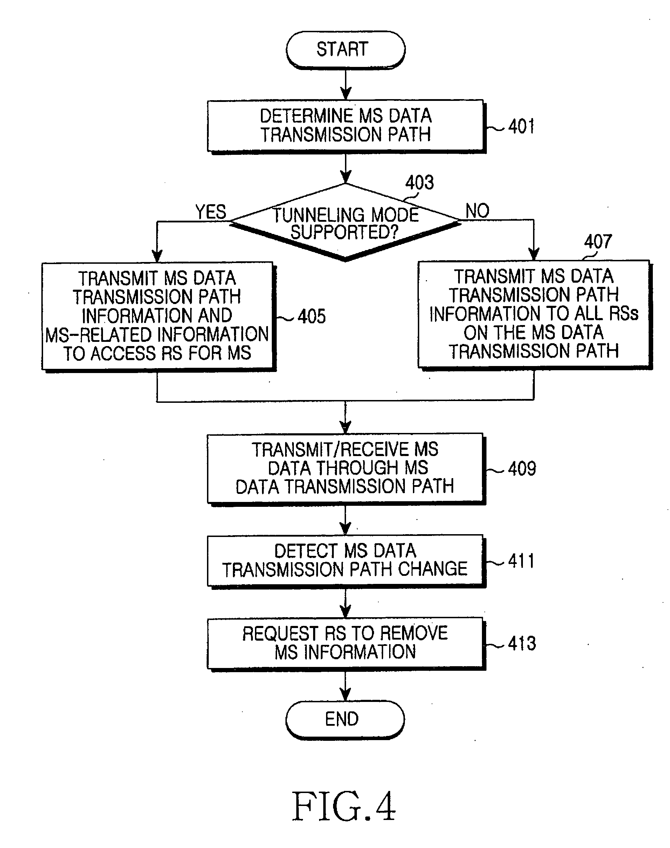

FIG 4 is a flowchart illustrating operation of a BS for establishing/removing an MS data transmission path in a multi-hop relay BWA communication system according to an embodiment of the present invention. Referring to FIG. 4, the BS determines a data transmission path for an MS in step 401. The determination of the MS data transmission path may be performed when the MS performs a network entry process or a network reentry process or when a data (or traffic) transmission path needs to be changed. Thereafter, in step 403, the BS determines whether to use a tunneling mode for transmission of data to the MS.

Herein, the tunneling mode denotes a mode where RSs other than an RS (i.e., an access RS) connected directly to the MS, among RSs on the MS data transmission path, relay MS data without detecting that the data is transmitted from/to the MS. When the tunneling mode is used, only the access RS connected directly to the MS manages information such as an MS connection identifier or a service flow identifier for detecting that the data transmission was from/to the MS, whereas the other RSs manage information such as a tunneling identifier (i.e., a tunneling CID) for supporting the tunneling mode. On the other hand, when the tunneling mode is not supported, all the RSs on the MS data transmission path manage information such as an MS connection identifier or a service flow identifier for detecting that the data transmission was from/to the MS.

If the tunneling mode is used, the operation proceeds to step 405, in which the BS transmits a message for requesting establishment of the MS data transmission path (hereinafter referred to as a path establishment message) to an access node (e.g., an access RS) of the MS. Herein, the path establishment message may include an MS connection identifier, a service flow identifier, the service type and requirements (service flow parameters) desired by the MS, a tunneling identifier to be used for MS data transmission, and a path identifier.

On the other hand, if the tunneling mode is not used, the operation proceeds to step 407, in which the BS transmits a path establishment message to all the RSs on the MS data transmission path. Herein, the path establishment message (e.g., Dynamic Service Addition-REQuest (DSA-REQ)) may include a path identifier, a connection identifier mapped (or bound) to the path, a service flow identifier, service flow parameters, and the list of RSs on the path. The RS receiving the path establishment message sets a routing table and transmits the path establishment message to a subordinate RS. These processes are repeated until the path establishment message is transmitted to the final node of the path (e.g., the access RS).

Thereafter, in step 409, the BS transmits/receives data to/from the MS using the established path. In step 411, the BS checks whether the path changes due to, for example, a handover, during the data transmission/reception. If the path changes, the operation proceeds to step 413. In step 413, the BS transmits a signaling message for requesting removal of the path (hereinafter referred to as a path removal message) to the access node (i.e., the access RS), which does not need to retain information about the MS any more, and the other RSs on the path. The other RSs receiving the path removal message delete the corresponding mapping information of the routing table to remove the unnecessary MS information that is not needed any more.

The path removal message may include a path identifier, a connection identifier to be removed, and an MS service flow identifier. That is, the path removal message includes in a preferred embodiment information for removing the mapping (or binding) of the path and the connection identifier. In this case, the path removal message transmitted to the access node may be identical to a signaling message for notifying the completion of a handover of the MS. Also, if the tunneling needs to be deleted, the BS may transmit a signaling message for requesting the tunneling deletion to the corresponding RSs in step 413. Herein, the tunneling deletion request message may include a tunneling identifier to be deleted.

Meanwhile, if a tunneling mode is determined in step 403, the BS determines whether RSs on the MS data transmission path know the corresponding tunneling information. If the RSs do not know the tunneling information, the BS may transmit a signaling message for requesting addition of the tunneling to the RSs. Herein, the tunneling addition request message may include an additional tunneling identifier and the service type and requirements for data transmitted using the tunneling identifier.

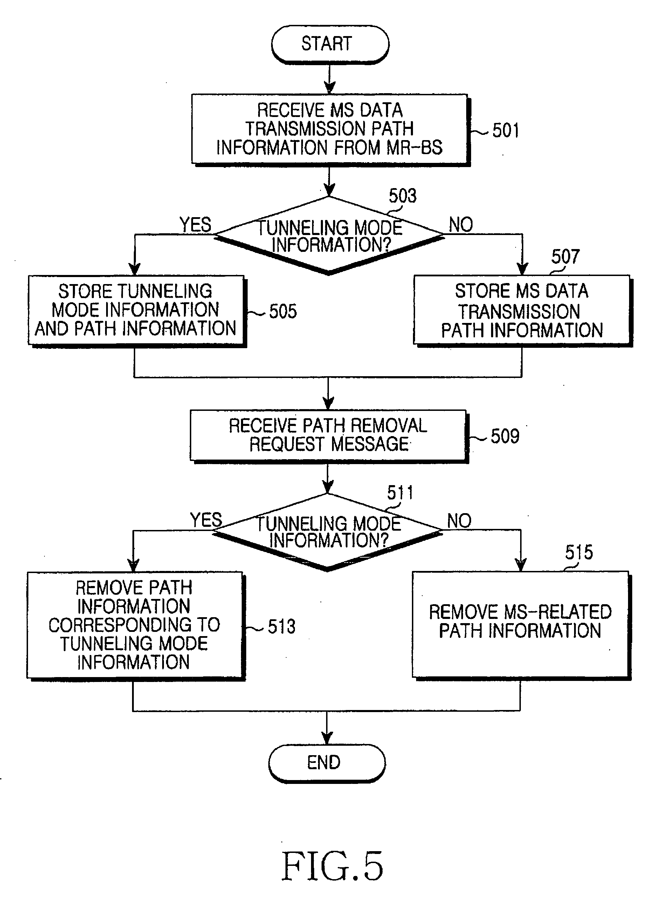

FIG 5 is a flowchart illustrating operation of an RS for receiving an MS information establishment/removal request from a BS in the multi-hop relay BWA communication system according to an embodiment of the present invention. Referring to FIG 5, the RS receives a signaling message including path information (hereinafter referred to as a path establishment message) from the BS (i.e., a Multi-hop Relay (MR)-BS) in step 501. Herein, the RS may be an access node of the MS or may be another RS on the MS data transmission path. In step 503, the RS analyzes the received path establishment message to detect whether tunneling information is received.

If the tunneling information is received, the operation proceeds to step 505. In step 505, the RS adds the tunneling information to its own routing table. Herein, the tunneling information may include a tunneling identifier, the service type and requirements corresponding to the tunneling identifier. On the other hand, if the path establishment message is received at step 503, the operation proceeds to step 507, in which the RS extracts path information from the path establishment message and adds the extracted path information to the routing table. Herein, the path establishment message may include a path identifier, an MS connection identifier mapped to the path, a service flow identifier, the service type and requirements desired by the MS, and the list of the RSs on the path. Meanwhile, the RS relays the MS data using the mapping information of the connection identifier and the path added to the routing table.

Thereafter, in step 509, the RS checks whether a signaling message for requesting removal of the path (hereinafter referred to as a path removal message) is received from the BS. If the path removal message is received in step 509, the operation proceeds to step 511, in which the RS analyzes the received path removal message to check whether tunneling removal information is received. If the tunneling removal information is received in step 511, the operation proceeds to step 513, in which the RS deletes the corresponding tunneling information from the routing table managed by the RS itself.

On the other hand, if MS path removal information is received in step 511, the operation proceeds to step 515, in which the RS deletes all the information related to the MS. For example, the RS may delete the binding information of the path and the connection identifier from the routing table.

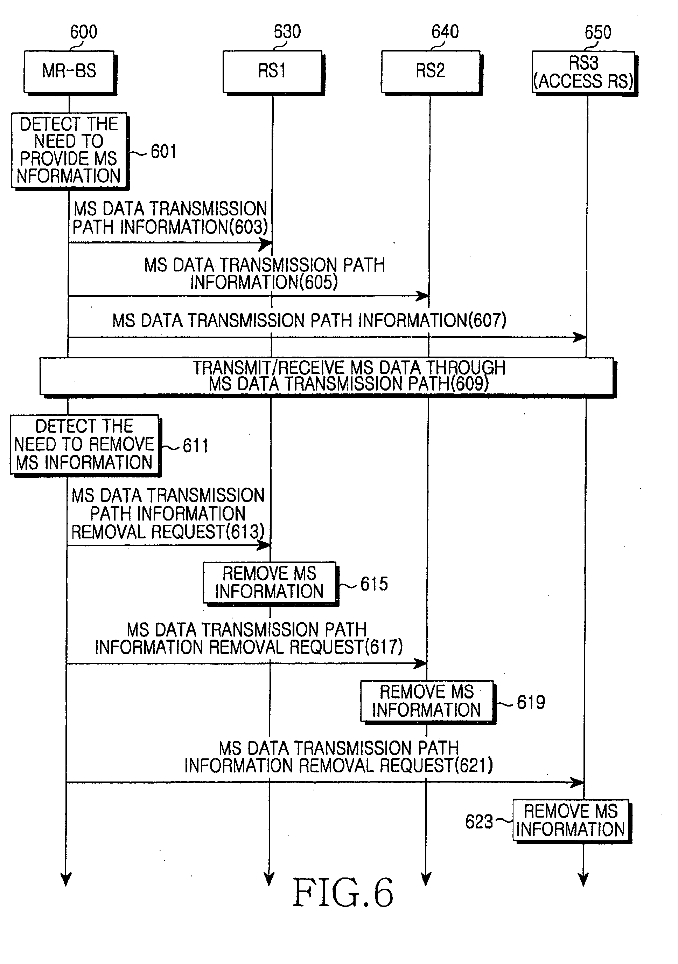

FIG 6 is a flow diagram illustrating a signal flow between a BS and an RS for processing an MS information establishment/removal request in the multi-hop relay BWA communication system according to an embodiment of the present invention. Referring to FIG 6, in step 601, an MR-BS 600 determines a path for MS data transmission and determines whether to transmit information necessary for MS data relay (i.e., a path establishment message) to RSs on the MS data transmission path. Herein, it is assumed that the path establishment message is transmitted to a first RS 630 (RS1), a second RS 640 (RS2), and a third RS 650 (RS3 or Access RS), which corresponds to an access node of the MS, which are located on the MS data transmission path.

Thus, in steps 603 through 607, the MR-BS 600 transmits the path establishment message to the first RS 630, the second RS 640, and the third RS 650. Herein, the path establishment message may include a path identifier, an MS identifier (CID) mapped to the path, an MS service identifier, the service type and requirements desired by the MS (service flow parameters), and the list of RSs on the path. If the tunneling mode is supported, the path establishment message may include a tunneling identifier and the service type and requirements corresponding to the tunneling identifier.

After the path is established as above, the MR-BS 600, the first RS 630, the second RS 640, and the third RS 650 transmit/receive MS data using the established path, in step 609. In step 611, the MR-BS 600 checks whether the MS data transmission path changes due to, for example, a handover of the MS or a mobile RS during the data transmission/reception. That is, the MR-BS 600 determines whether there is an RS needing to remove MS information (or routing information) among the RSs on the MS data transmission path. If there is an RS needing to remove MS information, the MR-BS 600 transmits a signaling message for requesting removal of the path (hereinafter referred to as a path removal request message) to the RS needing to remove the MS information. Herein, it is assumed that the path removal request message is transmitted to the first RS 630, the second RS 640 and the third RS 650.

Thus, the MR-BS 600 transmits the path removal request message to the first RS 630 in step 613, and the first RS 630 deletes information about the MS in step 615. For example, the first RS 630 may delete the binding information of the path and the connection identifier from the routing table. The MR-BS 600 transmits the path removal request message to the second RS 640 in step 617, and the second RS 640 deletes information about the MS in step 619. The MR-BS 600 transmits the path removal request message to the third RS 650 in step 621, and the third RS 650 deletes all information about the MS in step 623.

The above-described embodiment can be similarly applied to a case where established service flow information of an MS or removed service flow information of an MS is transmitted when a service flow connection of the MS is established or removed.

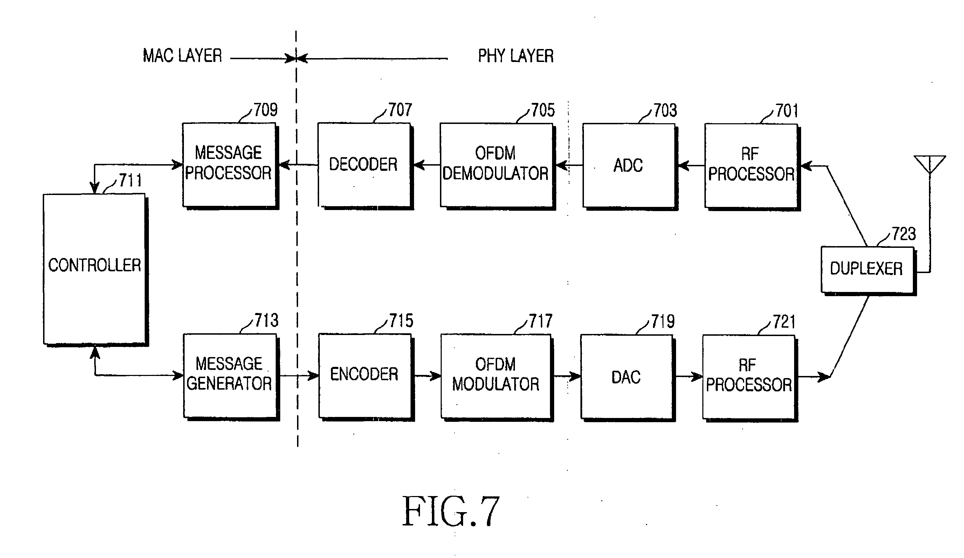

Since the BS and the RS have the same interface module (communication module) and the same block configuration, the constructions and operations of the BS and the RS will be described with reference to the same block diagram illustrated in FIG 7. The following description is made in the context of a Time Division Duplex-Orthogonal Frequency Division Multiple Access (TDD-OFDMA) communication system, to which the present invention is not limited. Thus, it is to be clearly understood that the present invention is applicable to a hybrid communication system using a TDD scheme and a Frequency Division Duplex (FDD) scheme in combination and to a cellular communication system using any other resource allocation scheme.

FIG 7 is a block diagram of a BS (or RS) according to an embodiment of the present invention. Referring to FIG 7, the MS (or RS) includes a receive (RX) Radio Frequency (RF) processor 701, an Analog-to-Digital Converter (ADC) 703, an OFDM demodulator 705, a decoder 707, a message processor 709, a controller 711, a message generator 713, an encoder 715, an OFDM modulator 717, a Digital-to-Analog Converter (DAC) 719, a transmit (TX) RF processor 721, and a duplexer 723.

Based on a duplexing scheme, the duplexer 723 transfers a TX signal received from the TX RF processor 721 to an antenna and transfers an RX signal received from the antenna to the RX RF processor 701. For example, based on a TDD scheme, the duplexer 723 transfers a TX signal received from the TX RF processor 721 to the antenna in a TX mode and transfers an RX signal received from the antenna to the RX RF processor 701 in an RX mode.

The RX RF processor 701 converts an RF signal received through the antenna into a baseband analog signal. The ADC 703 samples the analog signal received from the RX RF processor 701 to convert the analog signal into sample data. Using Fast Fourier Transform (FFT), the OFDM demodulator 705 transforms the sample data into frequency-domain data and selects data of subcarriers from the frequency-domain data.

The decoder 707 demodulates and decodes the selected data from the OFDM demodulator in accordance with a predetermined Modulation and Coding Scheme (MCS) level.

The message processor 709 analyzes a control message from the decoder 707 and provides the resulting information to the controller 711. The controller 711 processes the information from the message processor 709, generates TX information, and provides the TX information to the message generator 713. Herein, it is assumed that the controller 711 performs resource scheduling. The message generator 713 generates a message using a variety of information received from the controller 711 and provides the message to the encoder 715 of a physical layer.

The encoder 715 encodes and modulates data received from the message generator 713 according to a predetermined MCS level. The OFDM modulator 717 Inverse Fast Fourier Transform (IFFT)-processes data received from the encoder 715 to output sample data (OFDM symbols). The DAC 719 converts the sample data into an analog signal. The TX RF processor 721 converts the analog signal received from the DAC 719 into an RF signal to transmit the RF signal through the antenna.

In the above-described configuration, the controller 711 serves as a protocol controller that controls the message processor 709 and the message generator 713. The controller 711 may perform the functions of the message processor 709 and the message generator 713. Although separate units are provided for respective functions of the controller 711, the controller 711 may perform all or some of the respective functions instead of the separate units.

Also, the controller 711 receives information necessary for a protocol process from the corresponding unit of the physical layer, or provides a control signal to the corresponding unit of the physical layer.

The operations of the BS and the RS will now be described with reference to the configuration illustrated in FIG 7, concentrating on a signaling process performed in a Media Access Control (MAC) layer, initially describing the operation of the BS.

The controller 711 determines a data transmission path for an MS and determines whether a tunneling mode for the MS is supported. If the tunneling mode is supported, the controller 711 generates path establishment information according to the tunneling mode and provides the generated path establishment information to the message generator 713. Herein, the path establishment information may include an MS connection identifier, a service flow identifier, the service type and requirements desired by the MS, and a tunneling identifier. If an RS on the MS data transmission path needs to know tunneling mode resource information including the tunneling identifier, the controller 711 generates tunneling mode resource information to be transmitted to the RS and provides the generated tunneling mode resource information to the message generator 713.

On the other hand, if the tunneling mode is not supported, the controller 711 generates path establishment information to be transmitted to RSs on the MS data transmission path and provides the generated path establishment information to the message generator 713. Herein, the path establishment information may include a path identifier, an MS connection identifier mapped to the path, a service flow identifier, the service type and requirements desired by the MS, and a list of the RSs on the path.

Meanwhile, the controller 711 checks whether the MS data transmission path changes due to, for example, a handover of the MS. If the MS data transmission path changes, the controller 711 generates path removal information, which is to be transmitted so the RS that does not need to retain the MS information any more among the RSs on the MS data transmission path, and provides the generated path removal information to the message generator 713. Herein, the path removal information may include an MS identifier, a service flow identifier, and a path identifier to be removed.

The message generator 713 generates a signaling message of a predetermined format on the basis of the MS data transmission path information and the MS path removal information received from the controller 711, and provides the generated signaling message to a physical layer. The generated signaling message is converted into a transmittable format at the physical layer prior to transmission through the antenna.

The operation of the RS is now described. Herein, the RS may be an access RS of the MS, or may be an intermediate RS on the MS data transmission path.

The message processor 709 analyzes a signaling message received from the BS and provides the resulting information to the controller 711. When receiving a signaling message including the path information according to the present invention, the controller 711 checks whether the signaling message includes tunneling information.

If the signaling message includes the tunneling information, the controller 711 extracts the tunneling information from the signaling message and adds the extracted tunneling information to routing information (e.g., a routing table) managed by the controller 711. Herein, the tunneling information may include a tunneling identifier and the service type and requirements corresponding to the tunneling identifier. This tunneling information is used to relay MS data.

On the other hand, if the signaling message includes path information for transmission of MS data, the controller 711 extracts the path information from the signaling message and stores the extracted path information into the routing table. Herein, the path information may include a path identifier, an MS connection identifier mapped to the path, a service flow identifier, the service type and requirements (i.e., service flow parameters) desired by the MS, and the list of RSs on the path. This path information is used to relay MS data.

Meanwhile, when receiving a signaling message including the path removal information according to the present invention, the controller 711 checks whether the signaling message includes tunneling removal message.

If the signaling message includes the tunneling removal information, the controller 711 removes the tunneling information managed by the controller 711. Herein, the tunneling removal information may include a tunneling identifier to be removed. On the other hand, if the signaling message includes MS path removal information, rather than the tunneling removal information, the controller 711 removes information about the MS. Herein, the MS path removal information may include an MS identifier, a service flow identifier, and a path identifier.

As described above, the present invention defines the signaling messages for notifying the MS data transmission path establishment/removal request to the RSs on the multi-hop relay path for relaying the MS data in the multi-hop relay system, thereby making it possible for the RS or the BS to easily manage the MS information and resources. That is, it is possible to prevent the BS or the RS from retaining information about the MS that is not actually serviced.

Although the invention has been shown and described with reference to certain preferred embodiments thereof, it will be understood by those skilled in the art that various changes in form and details may be made therein without departing from the spirit and scope of the invention as defined by the appended claims.

## Claims

1. A method for a communication operation of a Base Station (BS) in a wireless communication system using a multi-hop relay scheme, the method comprising:
when a data transmission path of a Mobile Station (MS) changes, determining one or more Relay Stations (RSs) from which information about the MS is to be removed;
generating a path removal message; and
transmitting the path removal message to the one or more RSs.

2. The method of claim 1, wherein the path removal message includes at least one of a path identifier and a connection identifier.

3. The method of claim 2, wherein the connection identifier is one of an MS Connection IDentifier (CID) and a tunneling CID.

4. The method of claim 1, wherein the path removal message includes at least one of information for completely removing the path and information for deleting a mapping between the path and a connection identifier.

5. The method of claim 1, further comprising:
generating a path establishment message; and
transmitting the path establishment message to one or more RSs on the MS data transmission path after the path change.

6. The method of claim 5, wherein the path establishment message includes at least one of a path identifier, a connection identifier, a service flow identifier, service flow parameters, and a list of RSs on a corresponding path.

7. The method of claim 5, wherein when a tunneling mode is supported, the path establishment message includes at least one of a path identifier, an MS identifier, a service flow identifier, a tunneling identifier, service flow parameters corresponding to the tunneling identifier, and a list of RSs on a corresponding path.

8. The method of claim 5, wherein the path establishment message includes at least one of information for path addition and information for adding a mapping between the path and a connection identifier.

9. A method for a communication operation of a Relay Station (RS) in a wireless communication system using a multi-hop relay scheme, the method comprising:
receiving a path establishment message from a Base Station (BS) or a superordinate RS;
extracting a path identifier and a connection identifier from the path establishment message; and
adding a binding of the extracted path identifier and connection identifier into a routing table.

10. The method of claim 9, further comprising relaying data of a Mobile Station (MS) using the routing table.

11. The method of claim 9, wherein the path establishment message includes at least one of a path identifier, a connection identifier, a service flow identifier, service flow parameters, and a list of RSs on a corresponding path.

12. The method of claim 9, wherein when a tunneling mode is supported, the path establishment message includes at least one of a path identifier, an MS identifier, a service flow identifier, a tunneling identifier, service flow parameters corresponding to the tunneling identifier, and a list of RSs on a corresponding path.

13. The method of claim 9, wherein the path establishment message includes at least one of information for path addition and information for adding a mapping between the path and a connection identifier.

14. The method of claim 9, further comprising:
receiving a path removal message from the BS or the superordinate RS;
extracting a path identifier and a connection identifier from the path removal message; and
deleting the binding of the extracted path identifier and connection identifier from the routing table.

15. The method of claim 14, wherein the path removal message includes at least one of a path identifier and a connection identifier.

16. The method of claim 15, wherein the connection identifier is one of an MS Connection IDentifier (CID) and a tunneling CID.

17. The method of claim 14, wherein the path removal message includes at least one of information for completely removing the path and information for deleting a mapping between the path and a connection identifier.

18. An apparatus for a Base Station (BS) in a wireless communication system using a multi-hop relay scheme, the apparatus comprising:
a controller for determining a data transmission path of a Mobile Station (MS);
a message generator for generating a path establishment message including information about the determined path; and
a transmitter for encoding the path establishment message from the message generator and transmitting the encoded path establishment message to a Relay Station (RS).

19. The apparatus of claim 18, wherein the path establishment message includes at least one of a path identifier, a connection identifier, a service flow identifier, service flow parameters, and a list of RSs on a corresponding path.

20. The apparatus of claim 18, wherein when a tunneling mode is supported, the path establishment message includes at least one of a path identifier, an MS identifier, a service flow identifier, a tunneling identifier, service flow parameters corresponding to the tunneling identifier, and a list of RSs on a corresponding path.

21. The apparatus of claim 18, wherein the path establishment message includes at least one of information for path addition and information for adding a mapping between the path and a connection identifier.

22. The apparatus of claim 18, wherein the message generator generates a path removal message when the MS data transmission path changes; and the transmitter encodes the path removal message and transmits the encoded path removal message to one or more RSs from which the MS information is to be removed.

23. The apparatus of claim 22, wherein the path removal message includes at least one of a path identifier and a connection identifier.

24. The apparatus of claim 23, wherein the connection identifier is one of an MS Connection IDentifier (CID) and a tunneling CID.

25. The apparatus of claim 22, wherein the path removal message includes at least one of information for completely removing the path and information for deleting a mapping between the path and a connection identifier.

26. An apparatus for a Relay Station (RS) in a wireless communication system using a multi-hop relay scheme, the apparatus comprising:
a receiver for physical-layer decoding a received message;
a message processor for analyzing a signaling message received from the receiver, and extracting a path identifier and a connection identifier from a path establishment message received from a Base Station (BS) or a superordinate RS; and
a controller for adding a binding of the extracted path identifier and connection identifier into a routing table.

27. The apparatus of claim 26, wherein the controller relays data of a Mobile Station (MS) using the routing table.

28. The apparatus of claim 26, wherein the path establishment message includes at least one of a path identifier, a connection identifier, a service flow identifier, service flow parameters, and a list of RSs on a corresponding path.

29. The apparatus of claim 26, wherein when a tunneling mode is supported, the path establishment message includes at least one of a path identifier, an MS identifier, a service flow identifier, a tunneling identifier, service flow parameters corresponding to the tunneling identifier, and a list of RSs on a corresponding path.

30. The apparatus of claim 26, wherein the path establishment message includes at least one of information for path addition and information for adding a mapping between the path and a connection identifier.

31. The apparatus of claim 26, wherein when a path removal message is received from the BS or the superordinate RS, the controller deletes, from the routing table, a path identifier and a connection identifier that are extracted from the received path removal message.

32. The apparatus of claim 31, wherein the path removal message includes at least one of a path identifier and a connection identifier.

33. The apparatus of claim 32, wherein the connection identifier is one of an MS Connection IDentifier (CID) and a tunneling CID.

34. The apparatus of claim 31, wherein the path removal message includes at least one of information for completely removing the path and information for deleting a mapping between the path and a connection identifier.
